# EUROPEAN PATENT SPECIFICATION

(11) **EP 4 686 549 B1**
(45) Date of publication and mention of the grant of the patent: **07.10.2026**
(21) Application number: 24192661.7
(22) Date of filing: 02.08.2024
(51) Int. Cl.: B29C 65/14

(54) **HEATING DEVICE FOR A WELDING APPARATUS, WELDING APPARATUS AND METHOD FOR HEATING AN OBJECT**
HEIZVORRICHTUNG FÜR EINE SCHWEISSVORRICHTUNG, SCHWEISSVORRICHTUNG UND VERFAHREN ZUM ERWÄRMEN EINES GEGENSTANDES
DISPOSITIF DE CHAUFFAGE POUR UN APPAREIL DE SOUDAGE, APPAREIL DE SOUDAGE ET PROCÉDÉ DE CHAUFFAGE D'UN OBJET

(43) Date of publication of application: 04.02.2026
(73) Proprietor: Röchling Automotive SE, 68165 Mannheim (DE)
(72) Inventor: Civetta, Fabrizio, 39040 Montagna (IT)
(74) Representative: Ullrich & Naumann PartG mbB

(56) References cited:
- WO-A1-2013/153104
- US-A- 5 286 327

## Description

The invention relates to a heating device for a welding apparatus.

The invention further relates to a welding apparatus comprising a heating device.

Moreover, the invention relates to a method for heating an object to be welded.

Although applicable to any kind of heating devices for a welding apparatus, the present invention will be described with regard to heating devices for an automotive welding apparatus.

A heating device for a welding apparatus is for example known from US 5,151,149 A. The heating device comprises an elliptical or parabolic infrared heating lamp, which directs infrared light to a plastic polymer in order to heat up the plastic polymer. The infrared lamp can be a hot metal foil, a hot ceramic or a hot glass quartz. After the heating process, the plastic polymer can be joined to another plastic polymer, which results in a permanent connection between the two polymers.

Further heating devices are known from WO 2013/153104 A1 and US 5,286,327 A.

One of the disadvantages, however, is that the heating source has a high temperature during the heating process. This can lead to a burning of the plastic polymer. Moreover, the high temperature can cause an air drift due to the convection of heat, which can cause uneven heating of the object to be welded, when the heating source is positioned horizontally adjacent to the object to be welded.

One of the objectives of the present invention is therefore to provide a heating device for a welding apparatus, a welding apparatus and a method for heating an object to be welded, which is better suited for plastic polymer welding.

A further objective of the present invention is to provide an alternative heating device for a welding apparatus, an alternative welding apparatus and an alternative method for heating an object to be welded.

In an embodiment, the present invention may solve at least one of the objectives by a heating device according to claim 1.

In an embodiment, the present invention may solve at least one of the objectives by a welding apparatus comprising a heating device according to any of claims 1 to 9, a fixing device for fixing an object to be welded and a moving device for moving the object to be welded.

In an embodiment, the present invention may solve at least one of the objectives with a method for heating an object to be welded according to claim 12.

The term "LED" is to be understood in its broadest sense and relates especially in the description, preferably in the claims, to a light emitting object, preferably a diode, that is capable of emitting light by a current flowing through a semiconductor.

One of the advantages may be that the heating apparatus remains cool during the heating process, which reduces the risk of burning on accidental contact. Another advantage may be that a heating zone on the object to be welded can be controlled more precisely. Another advantage may be that the heating source can be quickly switched off. Moreover, an advantage may be that the heating device can be positioned horizontally adjacent to the object to be welded.

Further features, advantages and preferred embodiments are disclosed or may become apparent in the following.

The heating device further comprises at least one temperature sensor, configured to measure a temperature of an object to be welded, and a control unit, wherein the control unit is configured to control a heating power and/or a heating duration of the heat source, such that a difference between a measured temperature of the object to be welded and a target temperature is minimal, preferably wherein the control unit is configured to control the heat source with a PID-control scheme. Specifically, the heating device can be controlled in a closed loop in order to tightly control the temperature of the object. An advantage of this may be that the polymer is not burned by the heat source.

The heat source is configured to be switchable between an energized and a deenergized state, preferably with a pulse width modulation module or an electric current regulation unit. An advantage of this may be that the heating power of the heating device can be easily controlled. Specifically, this method can be used with LEDs because LEDs can be quickly switched on and off.

The temperature sensor is configured to measure the temperature of the object to be welded only if the heat source is in the deenergized state. Preferably, the temperature sensor can be coupled to the control unit such that the temperature sensor only measures the temperature during the pulse width modulation OFF phase. An advantage of this may be that an accuracy of the temperature readings can be improved.

According to a further preferred embodiment of the invention, the heat source is adapted to emit radiation with a wavelength between 650 nm and 950 nm, preferably between 700 nm and 900 nm. An advantage of this may be that plastics, specifically polymer plastics, can be heated efficiently.

According to a further preferred embodiment of the invention, the temperature sensor is mounted next to the heat source, preferably wherein the temperature sensor is a pyrometer and/or wherein the temperature sensor is mounted next to a first end of a fiber optic, wherein a second end of the fiber optic is mounted next to the object to be welded. With a fiber optic radiation emitted from the object to be welded, which is indicative of the object's temperature, can be transferred to a temperature sensor. Alternatively, the temperature sensor can be positioned adjacent to the object to be welded. An advantage of this may be that the accuracy of the temperature readings can be improved.

According to a further preferred embodiment of the invention, at least two, preferably at least three, preferably at least five, temperature sensors are provided. Multiple temperature sensors can measure the temperature at multiple locations, which enables a more precise control of the heating power of the heating device. An advantage of this may be that the object to be welded can be heated up uniformly.

According to a further preferred embodiment of the invention, the temperature sensor is integrated into the heat source. The heating device remains cool during the heating process due to the use of LEDs, which allows to position the temperature sensor in the heat source, i.e. directly adjacent to the LEDs. An advantage of this may be that the heating device can be more compact.

According to a further preferred embodiment of the invention, at least two, preferably at least three, preferably at least five, heat sources are provided, preferably wherein at least three LEDs are connected in series. Preferably four LEDs or five LEDs are connected in series. An advantage of this may be that the object to be welded can be heated up uniformly.

According to a further preferred embodiment of the invention, a heat emitting angle of the heat source is between 40° and 180°, preferably between 50° and 90°. The heat emitting angle is preferably the angle in which the LEDs are radiating at least 80%, preferably at least 90%, of their light. An advantage of this may be that the heating of the object to be welded can be provided more precisely.

According to a further preferred embodiment of the invention, at least one heat source, preferably all heat sources, are attached to a circuit board predominately made from a metal with a high thermal conductivity, preferably aluminum. An advantage of this may be that any heat generated by the LEDs can be quickly dissipated via the circuit board, resulting in a lower temperature of the heating device.

According to a further preferred embodiment of the invention, light emitted from the LEDs is modified with regard to focus distance, amplitude, wavelength and/or frequency with at least one lens, at least one light guide and/or at least one mirror. An advantage of this may be that the heating power of the heating device can be precisely adjusted. Additionally, the heating device can be positioned away from the object to be heated and the infrared red light can be guided to the object to be welded. A further advantage of this may be that hard-to-reach surface areas of the object to be welded can be heated up.

According to a further preferred embodiment of the invention, the fixing device is configured to fix the object to be welded horizontally adjacent to the heating device. An advantage of this may be that a chance of molten material dripping from the heated object to be welded is reduced.

There are several ways how to design and further develop the teaching of the present invention in an advantageous way. To this end, it is to be referred to the patent claims subordinate to the independent patent claims on the one hand and to the following explanation of preferred examples of embodiments of the invention, illustrated by the drawings on the other hand. In connection with the explanation of the preferred embodiments of the invention by the aid of the drawings, generally preferred embodiments and further developments of the teaching will be explained.

In the drawings
- Fig. 1: shows a heating device according to an embodiment of the invention;
- Fig. 2: shows a welding device according to an embodiment of the invention; and
- Fig. 3: shows steps of a method for heating an object to be welded.

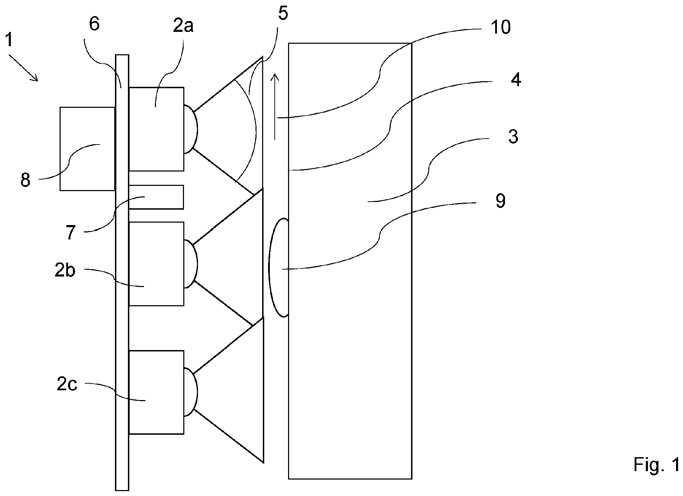

Figure 1 shows a heating device according to an embodiment of the invention.

The heating device 1 comprises three heat sources in the form of LEDs 2a, 2b, 2c, which are able to emit infrared light onto an object to be welded 3. It is also feasible that the heat sources are in the form of direct semiconductors, which can irradiate infrared light from a surface. Due to the infrared light, the surface 4 of the object to be welded 3 can be heated up and at least partially melted. The LEDs 2a-2c emit the infrared light within an emitting angle 5 of between 50° and 90° and are mounted onto a circuit board 6. It is possible that the emitting angles 5 of the LEDs 2a-c overlap each other or that at least part of them are distinct from each other.

The circuit board 6 is made from aluminum, such that heat generated by the LEDs 2a-2c can be quickly dissipated. Due to the facts that the LEDs 2a-c produce little heat themselves and the high thermal conductivity of the printed circuit board 6, the printed circuit board 6 remains cool during the heating process. This allows for a temperature sensor 7, here in form of a pyrometer, to be attached next to the LEDs 2a-2c. The pyrometer 7 can measure the temperature of the surface 4 of the object to be welded 3.

The object to be welded 3 can preferably be a plastic polymer, which might burn if it is heated to a too high temperature. In order to avoid burning, a control unit 8 is used, which controls the heating power and/or heating duration of the LEDs 2a-2c such that the temperature of the surface 4 of the object to be welded 3 remains at a target temperature. Specifically, the control unit 8 can control the LEDs 2a-c with a pulse width modulation control theme, wherein the LEDs 2a-c are periodically switched on and off depending on the measured temperature of the surface 4. The ratio of the time of the LEDs 2a-c being switched on, to the time of the LEDs 2a-c being switched off determines the overall heating power of the LEDs 2a-c. The temperature sensor 7 measures the temperature during the periods with the LEDs 2a-c being switched off. It is also feasible, that a power supply to the LEDs 2a-c and/or a frequency of the LEDs 2a-c is changed in order to regulate or adapt the heating power.

All or some of the LEDs 2a-c can be controlled independently of each other. Thereby, specific regions of the object to be welded 3 can be heated differently. For example, a protrusion 9 of the object to be welded 3 could be heated with less power, to compensate the fact that the protrusion 9 is positioned closer to the LEDs 2a-c. Moreover, it is possible that the light emitted from the LEDs 2a-c is guided via light guides or mirrors (not shown) to specific regions of the object to be welded 3.

The heating device 1 is positioned horizontally adjacent to the object to be welded 3, in Figure 1 to the left of the object to be welded 3. Due to the fact, that the heating element remains cool during the heating process, the air between the heating device 1 and the object to be welded 3 is not heated up too high. Thereby a "chimney effect", which could cause uneven heating along a vertical direction 10 of the surface 4 of the object to be welded 3, can be avoided.

The control unit 8 can be positioned on the heating device 1, preferably mounted on the preferably printed circuit board 6 (PCB). The control unit 8 integrated into the heating device 1 creates a sort of by-pass to reduce the current (power) in some specific zones in case of maximal current requested on the heating device 1. In an alternative embodiment, the control unit 8 is positioned externally. Said externally positioned control unit 8 does not require a complete power regulation on the heating device 1 in case of maximal current requested on the heating device 1. Therefore, the alternative embodiment is less expensive.

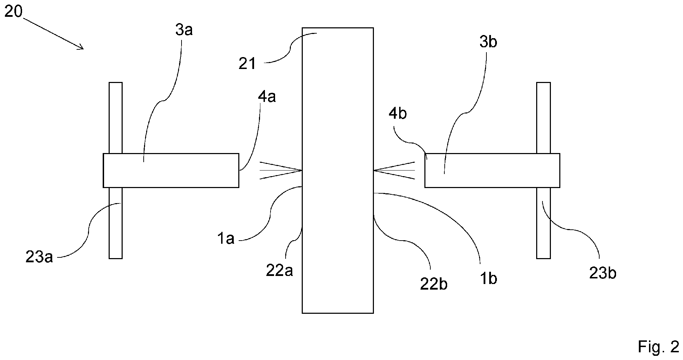

Figure 2 shows a welding device according to an embodiment of the invention.

The welding device 20 comprises a welding rod 21, which comprises a first side 22a and a second side 22b, which is located opposite of the first side 22a. On the first and second side 22a, 22b a heating device 1a, 1b is positioned, respectively. The heating devices 1a, 1b can especially be in the form of the heating device 1 according to Figure 1.

Horizontally adjacent to the first side 22a of the welding rod 21, a first object to be welded 3a is positioned and horizontally adjacent to the second side 22b of the welding rod 21 a second object to be welded 3b is positioned. The first and second object to be welded 3a, 3b are held in place via fixing means 23a, 23b, here in the form of clamps. Due to the infrared radiation of the heating devices 1a, 1b, a surface 4a, 4b of the objects to be welded 3a, 3b can be heated up, such that the surface 4a, 4b melts.

Afterwards the first and second object to be welded 3a, 3b are moved via a moving device (not shown) towards each other, until their surfaces 4a, 4b contact each other. Thereby, the first and second object to be welded 3a, 3b are welded together.

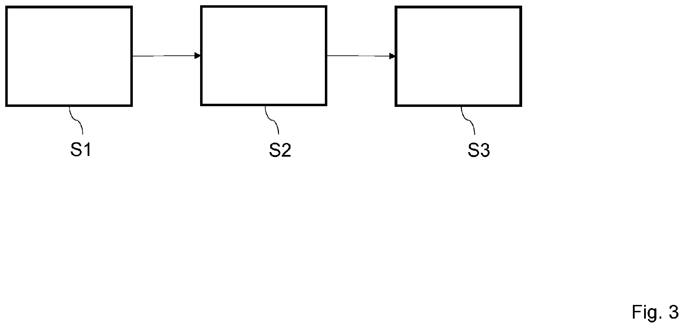

Figure 3 shows steps of a method for heating an object to be welded.

With the method described in Figure 3, an object to be welded can be heated up.

In a first step S1, a heat source is energized for a first time period to irradiate the object to be welded with light, wherein the heat source is an infrared LED and/or a direct semiconductor. Due to the infrared light, the object to be welded is locally heated up, specifically, a surface temperature of the object to be welded is increased such that the surface melts. The object to be welded can especially be heated up by a heating device according to Figure 1.

In a further step S2, the heat source is deenergized for a second time period and the temperature of the object to be welded is measured during said second time period only. Preferably, the temperature of the object is monitored by one or more pyrometers, which measure the temperature of the entire surface and/or of distinct regions of the surface.

In a further step S3, a power of the heat source and/or a length of the first time period and/or a length of the second time period is controlled, such that a difference between a measured temperature and a target temperature is lower than a predetermined threshold. Preferably, the LEDs are regulated with a pulse width modulation scheme, in which the LEDs are rapidly sequentially energized and deenergized. The time of the energization compared to the time of deenergization determines the heating power, which is controlled to regulate a temperature of the object to be welded. Specifically, a PID-control scheme is used.

At least one embodiment may provide at least one of the following features and/or at least one of the following advantages:
- The heating device remains cool during the heating process.
- The object to be heated can be positioned horizontally adjacent to the heating device.
- Different regions of the object to be welded can be heated differently.
- Uniform heating of the object to be welded.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1, 1a, 1b: Heating device
- 2a, 2b, 2c: LED
- 3, 3a, 3b: Object to be welded
- 4, 4a, 4b: Surface
- 5: Emitting angle
- 6: Circuit board
- 7: Temperature sensor
- 8: Control unit
- 9: Protrusion
- 10: Vertical direction

- 20: Welding device
- 21: Welding rod
- 22a: First side of the welding rod
- 22b: Second side of the welding rod
- 23a, 23b: Fixing means

- S1-S3: Steps of a method

## Claims

1. Heating device (1) for a welding apparatus comprising at least one infrared heat source (2a, 2b, 2c), wherein the infrared heat source (2a, 2b, 2c) comprises at least one infrared **LED** and/or a direct semiconductor, and wherein
the heating device (1) further comprises at least one temperature sensor (7), configured to measure a temperature of an object to be welded (3, 3a, 3b), and a control unit (8), wherein the control unit (8) is configured to control a heating power and/or a heating duration of the heat source (2a, 2b, 2c), such that a difference between a measured temperature of the object to be welded (3, 3a, 3b) and a target temperature is minimal, preferably wherein the control unit (8) is configured to control the heat source (2a, 2b, 2c) with a PID-control scheme, and wherein
the heat source (2a, 2b, 2c) is configured to be switchable between an energized and a deenergized state, preferably with a pulse width modulation module or an electric current regulation unit **characterized in that**
the temperature sensor (7) is configured to measure the temperature of the object to be welded (3, 3a, 3b) only if the heat source (2a, 2b, 2c) is in the deenergized state.

2. Heating device (1) according to claim 1, **characterized in that** the heat source (2a, 2b, 2c) is adapted to emit radiation with a wavelength between 650 nm and 950 nm, preferably between 700 nm and 900 nm.

3. Heating device (1) according to any of claims 1 to 2, **characterized in that** the temperature sensor (7) is mounted next to the heat source (2a, 2b, 2c), preferably wherein the temperature sensor (7) is a pyrometer and/or wherein the temperature sensor (7) is mounted next to a first end of a fiber optic, wherein a second end of the fiber optic is mounted next to the object to be welded (3, 3a, 3b).

4. Heating device (1) according to any of claims 1 to 3, **characterized in that** at least two, preferably at least three, preferably at least five, temperature sensors (7) are provided.

5. Heating device (1) according to any of claims 1 to 4, **characterized in that** the temperature sensor (7) is integrated into the heat source (2a, 2b, 2c).

6. Heating device (1) according to any of claims 1 to 5, **characterized in that** at least two, preferably at least three, preferably at least five, heat sources (2a, 2b, 2c) are provided, preferably wherein at least three LEDs are connected in series.

7. Heating device (1) according to any of claims 1 to 6, **characterized in that** a heat emitting angle (5) of the heat source (2a, 2b, 2c) is between 40° and 180°, preferably between 50° and 90°.

8. Heating device (1) according to any of claims 1 to 7, **characterized in that** at least one heat source (2a, 2b, 2c), preferably all heat sources (2a, 2b, 2c), are attached to a circuit board (6) predominately made from a metal with a high thermal conductivity, preferably aluminum.

9. Heating device (1) according to any of claims 1 to 8, **characterized in that** light emitted from the LEDs (2a, 2b, 2c) is modified with regard to focus distance, amplitude, wave length and/or frequency with at least one lens, at least one light guide and/or at least one mirror.

10. Welding apparatus (20) comprising a heating device (1) according to any of claims 1 to 9, a fixing device (23a, 23b) for fixing an object to be welded (3, 3a, 3b) and a moving device for moving the object to be welded (3, 3a, 3b).

11. Welding apparatus (20) according to claim 10, wherein the fixing device (23a, 23b) is configured to fix the object to be welded (3, 3a, 3b) horizontally adjacent to the heating device (1).

12. Method for heating an object to be welded (3, 3a, 3b) comprising the steps of:
- Energizing (S1) a heat source (2a, 2b, 2c) for a first time period to irradiate the object to be welded (3, 3a, 3b) with light, wherein the heat source (2a, 2b, 2c) is an infrared **LED** and/or a direct semiconductor,
- deenergizing (S2) the heat source (2a, 2b, 2c) for a second time period,
- measuring the temperature of the object to be welded (3, 3a, 3b) only during said second time period, and
- controlling (S3) a power of the heat source (2a, 2b, 2c) and/or a length of the first time period and/or a length of the second time period, such that a difference between a measured temperature and a target temperature is lower than a predetermined threshold.

## Patentansprüche

1. Heizvorrichtung (1) für eine Schweißvorrichtung, umfassend mindestens eine Infrarot-Wärmequelle (2a, 2b, 2c), wobei die Infrarot-Wärmequelle (2a, 2b, 2c) mindestens eine Infrarot-LED und/oder einen Direkt-Halbleiter umfasst, und wobei die Heizvorrichtung (1) ferner mindestens einen Temperatursensor (7), der zur Messung einer Temperatur eines zu schweißenden Objekts (3, 3a, 3b) ausgebildet ist, und eine Steuereinheit (8) umfasst, wobei die Steuereinheit (8) dazu ausgebildet ist, eine Heizleistung und/oder eine Heizdauer der Wärmequelle (2a, 2b, 2c) so zu steuern, dass eine Differenz zwischen einer gemessenen Temperatur des zu schweißenden Objekts (3, 3a, 3b) und einer Solltemperatur minimal ist, vorzugsweise wobei die Steuereinheit (8) so ausgebildet ist, dass sie die Wärmequelle (2a, 2b, 2c) mit einem PID-Regelverfahren steuert, und wobei
die Wärmequelle (2a, 2b, 2c) so ausgebildet ist, dass sie zwischen einem eingeschalteten und einem ausgeschalteten Zustand umgeschaltet werden kann, vorzugsweise mit einem Pulsweitenmodulationsmodul oder einer Stromregelungseinheit, **dadurch gekennzeichnet, dass**
der Temperatursensor (7) so ausgebildet ist, dass er die Temperatur des zu schweißenden Objekts (3, 3a, 3b) nur dann misst, wenn sich die Wärmequelle (2a, 2b, 2c) im ausgeschalteten Zustand befindet.

2. Heizvorrichtung (1) nach Anspruch 1, **dadurch gekennzeichnet, dass** die Wärmequelle (2a, 2b, 2c) dazu ausgebildet ist, Strahlung mit einer Wellenlänge zwischen 650 nm und 950 nm, vorzugsweise zwischen 700 nm und 900 nm, zu emittieren.

3. Heizvorrichtung (1) nach einem der Ansprüche 1 bis 2, **dadurch gekennzeichnet, dass** der Temperatursensor (7) neben der Wärmequelle (2a, 2b, 2c) angeordnet ist, vorzugsweise wobei der Temperatursensor (7) ein Pyrometer ist und/oder wobei der Temperatursensor (7) neben einem ersten Ende einer Lichtleitfaser angeordnet ist, wobei ein zweites Ende der Lichtleitfaser neben dem zu schweißenden Objekt (3, 3a, 3b) angeordnet ist.

4. Heizvorrichtung (1) nach einem der Ansprüche 1 bis 3, **dadurch gekennzeichnet, dass** mindestens zwei, vorzugsweise mindestens drei, vorzugsweise mindestens fünf Temperatursensoren (7) vorgesehen sind.

5. Heizvorrichtung (1) nach einem der Ansprüche 1 bis 4, **dadurch gekennzeichnet, dass** der Temperatursensor (7) in die Wärmequelle (2a, 2b, 2c) integriert ist.

6. Heizvorrichtung (1) nach einem der Ansprüche 1 bis 5, **dadurch gekennzeichnet, dass** mindestens zwei, vorzugsweise mindestens drei, vorzugsweise mindestens fünf Wärmequellen (2a, 2b, 2c) vorgesehen sind, vorzugsweise wobei mindestens drei LEDs in Reihe geschaltet sind.

7. Heizvorrichtung (1) nach einem der Ansprüche 1 bis 6, **dadurch gekennzeichnet, dass** ein Abstrahlwinkel (5) der Wärmequelle (2a, 2b, 2c) zwischen 40° und 180°, vorzugsweise zwischen 50° und 90°, liegt.

8. Heizvorrichtung (1) nach einem der Ansprüche 1 bis 7, **dadurch gekennzeichnet, dass** mindestens eine Wärmequelle (2a, 2b, 2c), vorzugsweise alle Wärmequellen (2a, 2b, 2c), auf einer Leiterplatte (6) angeordnet sind, die überwiegend aus einem Metall mit hoher Wärmeleitfähigkeit, vorzugsweise Aluminium, hergestellt ist.

9. Heizvorrichtung (1) nach einem der Ansprüche 1 bis 8, **dadurch gekennzeichnet, dass** das von den LEDs (2a, 2b, 2c) emittierte Licht hinsichtlich Brennweite, Amplitude, Wellenlänge und/oder Frequenz durch mindestens eine Linse, mindestens einen Lichtleiter und/oder mindestens einen Spiegel modifiziert wird.

10. Schweißvorrichtung (20), umfassend eine Heizvorrichtung (1) gemäß einem der Ansprüche 1 bis 9, eine Befestigungsvorrichtung (23a, 23b) zum Befestigen eines zu schweißenden Objekts (3, 3a, 3b) und eine Bewegungsvorrichtung zum Bewegen des zu schweißenden Objekts (3, 3a, 3b).

11. Schweißvorrichtung (20) nach Anspruch 10, wobei die Haltevorrichtung (23a, 23b) so ausgebildet ist, dass sie das zu schweißende Objekt (3, 3a, 3b) horizontal neben der Heizeinrichtung (1) fixiert.

12. Verfahren zum Erwärmen eines zu schweißenden Objekts (3, 3a, 3b), umfassend die folgenden Schritte:
- Einschalten (S1) einer Wärmequelle (2a, 2b, 2c) für einen ersten Zeitraum, um das zu schweißende Objekt (3, 3a, 3b) mit Licht zu bestrahlen, wobei die Wärmequelle (2a, 2b, 2c) eine Infrarot-LED und/oder ein direkter Halbleiter ist,
- Abschalten (S2) der Wärmequelle (2a, 2b, 2c) für einen zweiten Zeitraum,
- Messen der Temperatur des zu schweißenden Objekts (3, 3a, 3b) ausschließlich während des genannten zweiten Zeitraums, und
- Steuern (S3) einer Leistung der Wärmequelle (2a, 2b, 2c) und/oder einer Dauer des ersten Zeitraums und/oder einer Dauer des zweiten Zeitraums, derart, dass eine Differenz zwischen einer gemessenen Temperatur und einer Solltemperatur unter einem vorgegebenen Schwellenwert liegt.

## Revendications

1. Dispositif de chauffage (1) pour un appareil de soudage comprenant au moins une source de chaleur infrarouge (2a, 2b, 2c), dans lequel la source de chaleur infrarouge (2a, 2b, 2c) comprend au moins une LED infrarouge et/ou un semiconducteur direct, et dans lequel
le dispositif de chauffage (1) comprend en outre au moins un capteur de température (7), configuré pour effectuer une mesure d'une température d'un objet à souder (3, 3a, 3b), et une unité de commande (8), dans lequel l'unité de commande (8) est configurée pour effectuer une régulation d'une puissance de chauffage et/ou d'une durée de chauffage de la source de chaleur (2a, 2b, 2c), de sorte qu'une différence entre une température mesurée de l'objet à souder (3, 3a, 3b) et une température cible soit minimale, de préférence dans lequel l'unité de commande (8) est configurée pour effectuer une régulation de la source de chaleur (2a, 2b, 2c) selon un schéma de régulation PID, et dans lequel
la source de chaleur (2a, 2b, 2c) est configurée pour être commutable entre un état activé et un état désactivé, de préférence avec un module de modulation de largeur d'impulsion ou une unité de régulation du courant électrique, **caractérisé en ce que** le capteur de température (7) est configuré pour effectuer une mesure de la température de l'objet à souder (3, 3a, 3b) uniquement si la source de chaleur (2a, 2b, 2c) est dans l'état désactivé.

2. Dispositif de chauffage (1) selon la revendication 1, **caractérisé en ce que** la source de chaleur (2a, 2b, 2c) est adaptée pour émettre un rayonnement avec une longueur d'onde comprise entre 650 nm et 950 nm, de préférence entre 700 nm et 900 nm.

3. Dispositif de chauffage (1) selon l'une quelconque des revendications 1 à 2, **caractérisé en ce que** le capteur de température (7) est monté à côté de la source de chaleur (2a, 2b, 2c), de préférence dans lequel le capteur de température (7) est un pyromètre et/ou dans lequel le capteur de température (7) est monté à côté d'une première extrémité d'une fibre optique, dans lequel une seconde extrémité de la fibre optique est montée à côté de l'objet à souder (3, 3a, 3b).

4. Dispositif de chauffage (1) selon l'une quelconque des revendications 1 à 3, **caractérisé en ce qu'**au moins deux, de préférence au moins trois, de préférence au moins cinq, capteurs de température (7) sont prévus.

5. Dispositif de chauffage (1) selon l'une quelconque des revendications 1 à 4, **caractérisé en ce que** le capteur de température (7) est intégré dans la source de chaleur (2a, 2b, 2c).

6. Dispositif de chauffage (1) selon l'une quelconque des revendications 1 à 5, **caractérisé en ce qu'**au moins deux, de préférence au moins trois, de préférence au moins cinq, sources de chaleur (2a, 2b, 2c) sont prévues, de préférence dans lequel au moins trois LED sont connectées en série.

7. Dispositif de chauffage (1) selon l'une quelconque des revendications 1 à 6, **caractérisé en ce qu'**un angle d'émission de chaleur (5) de la source de chaleur (2a, 2b, 2c) est compris entre 40° et 180°, de préférence entre 50° et 90°.

8. Dispositif de chauffage (1) selon l'une quelconque des revendications 1 à 7, **caractérisé en ce qu'**au moins une source de chaleur (2a, 2b, 2c), de préférence toutes les sources de chaleur (2a, 2b, 2c), sont fixées sur une carte de circuit imprimé (6) principalement constituée d'un métal ayant une conductivité thermique élevée, de préférence d'aluminium.

9. Dispositif de chauffage (1) selon l'une quelconque des revendications 1 à 8, **caractérisé en ce que** la lumière émise par les LED (2a, 2b, 2c) est modifiée en ce qui concerne la distance de focalisation, l'amplitude, la longueur d'onde et/ou la fréquence avec au moins une lentille, au moins un guide de lumière et/ou au moins un miroir.

10. Appareil de soudage (20) comprenant un dispositif de chauffage (1) selon l'une quelconque des revendications 1 à 9, un dispositif de fixation (23a, 23b) pour fixer un objet à souder (3, 3a, 3b) et un dispositif de déplacement pour déplacer l'objet à souder (3, 3a, 3b).

11. Appareil de soudage (20) selon la revendication 10, dans lequel le dispositif de fixation (23a, 23b) est configuré pour fixer l'objet à souder (3, 3a, 3b) adjacent horizontalement au dispositif de chauffage (1).

12. Procédé de chauffage d'un objet à souder (3, 3a, 3b) comprenant les étapes suivantes :
- activation (S1) d'une source de chaleur (2a, 2b, 2c) pendant une première durée pour irradier l'objet à souder (3, 3a, 3b) avec de la lumière, dans lequel la source de chaleur (2a, 2b, 2c) est une LED infrarouge et/ou un semiconducteur direct,
- désactivation (S2) de la source de chaleur (2a, 2b, 2c) pendant une seconde durée,
- mesure de la température de l'objet à souder (3, 3a, 3b) uniquement pendant ladite seconde durée, et
- régulation (S3) d'une puissance de la source de chaleur (2a, 2b, 2c) et/ou d'une durée de la première période et/ou d'une durée de la seconde période, de sorte qu'une différence entre une température mesurée et une température cible soit inférieure à un seuil prédéterminé.
